Europäisches Patentamt

European Patent Office

Office européen des brevets

(11) Publication number: **0 142 789**
**B1**

## (12) EUROPEAN PATENT SPECIFICATION

(45) Date of publication of patent specification: **01.08.90**    (51) Int. Cl.⁵: **H 04 B 7/17**

(21) Application number: **84113521.3**

(22) Date of filing: **09.11.84**

(54) **Radio relay method and apparatus for digital communication.**

(30) Priority: **11.11.83 JP 212011/83**

(43) Date of publication of application:
**29.05.85 Bulletin 85/22**

(45) Publication of the grant of the patent:
**01.08.90 Bulletin 90/31**

(84) Designated Contracting States:
**DE FR GB IT NL**

(56) References cited:
**EP-A-0 085 940**

(73) Proprietor: **FUJITSU LIMITED**
**1015, Kamikodanaka Nakahara-ku**
**Kawasaki-shi Kanagawa 211 (JP)**

(72) Inventor: **Kawai, Masahisa**
**3081-6, Zama 1-chome**
**Zama-shi Kanagawa 228 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

## Description

The present invention relates to radio relay methods and apparatus for digital communication. The invention may be applied to radio relay systems using micro-waves or millimeter-waves.

The radio relay system is to relay a main signal and an auxiliary signal from one terminal station to another through relay stations. Two radio transmitters and two radio receivers are provided at each terminal station and two radio repeaters are provided at each relay station for a back-and-forth communication. The main signal is to transmit digital information like aural, visual, and data information, and the auxiliary signal is to supervise and/or control remotely the relay stations to maintain them in good condition at or from the terminal station; usually, the terminal station is an attended station and the relay station is an unattended station. The auxiliary signal comprises a order-wire channel, a supervisory signal, and a control signal which includes a pilot signal. The order-wire channel is for communication between the attended persons at the terminal station and the relay station for the maintenance of the radio relay system, the supervisory signal is to supervise remotely the state of the radio repeaters from the terminal stations, the control signal is to control remotely the radio repeaters from the terminal stations, and the pilot signal is to define a route of each radio relay system. Above all, the pilot signal is related to the present invention; it will be minutely explained later. The main signal is transmitted by a radio carrier modulated by phase shift keying (PSK) modulation and the auxiliary signal is usually transmitted by modulating slightly the carrier in a form of frequency modulation (FM).

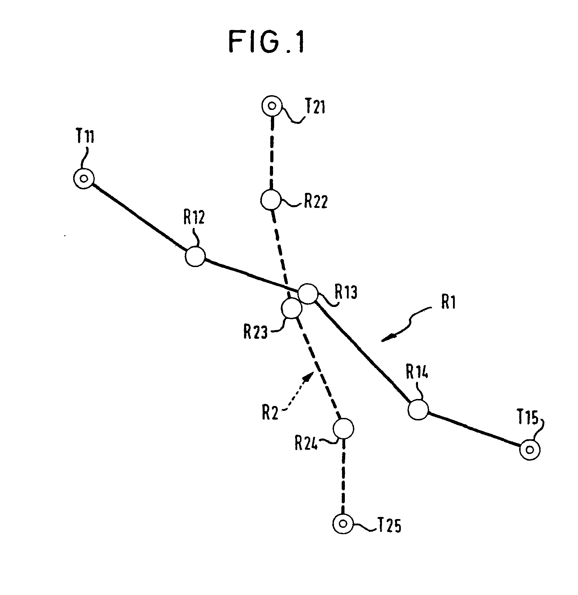

The pilot signals are to identify individually their own route of the radio relay system. Fig. 1 shows an example of two routes R1 and R2; the route R1 consists of terminal stations $T_{11}$ and $T_{15}$ and relay stations $R_{12}$, $R_{13}$, and $R_{14}$; and the route R2 consists of terminal stations $T_{21}$ and $T_{25}$ and relay stations $R_{22}$, $R_{23}$, and $R_{24}$. Let us assume that the routes R1 and R2 intersect each other at a set up point of the relay stations $R_{13}$ and $R_{23}$. A pilot signal is provided by synthesizing different low frequencies, so each route has its own pilot signal of a synthesized frequency; $P_1$ is a pilot signal for the route R1, and $P_2$ is for the route R2.

For the terminal and relay stations, the pilot signal is necessary to distinguish on which radio wave a received signal comes in, on a desired wave or on an undesired wave. The desired wave is the correct radio wave which should be received by the terminal or relay station, and the undesired wave, though its radio frequency is the same as that of the desired wave, is an incorrect radio wave such as a radio wave which comes into a receiving antenna of the terminal or relay station in the form of an interference wave produced by radio waves from the regular route and an adjacent irregular route. Usually, it is impossible to avoid having the undesired wave at the terminal or relay station because of antenna characteristics like a side lobe of an antenna. Especially in the case of digital communication, the radio relay system tends to receive easily the undesired wave because it substantially requires wide occupied frequency band-width. However, if the level of the desired wave is dominant to the undesired wave level, the radio relay system is not affected by existence of a small undesired wave, because, the quality of the digital communication substantially does not depend on the signal to noise (S/N) ratio as an analog communication does. However, if the desired wave decays because of fading for example, the undesired wave happens to become dominant; the pilot signal is useful for this case.

In Fig. 1, when the main signals are respectively transmitted from the terminal station $T_{11}$ to $T_{15}$ in the route R1 and from $T_{21}$ to $T_{25}$ in the route R2, and when the radio transmission between the relay stations $R_{12}$ and $R_{13}$ in the route R1 is attenuated by heavy rain, an interference wave produced between the radio waves of the routes R1 and R2 becomes dominant at the relay station $R_{13}$, which causes the main signal in the route R2 to cut into the route R1 at the relay station $R_{13}$. This results in false reception of main signal at the terminal station $T_{15}$. Then, the radio receiver at the terminal station $T_{15}$ rejects the false signal by detecting the pilot signal $P_2$.

As digital communication becomes more popular, radio waves for communication become congested, especially in the city. Therefore, the undesired wave is becoming a very important subject to be considered in the radio repeater. More detail as to the received signal on the undesired wave will be explained later showing a block diagram of the prior art radio repeater.

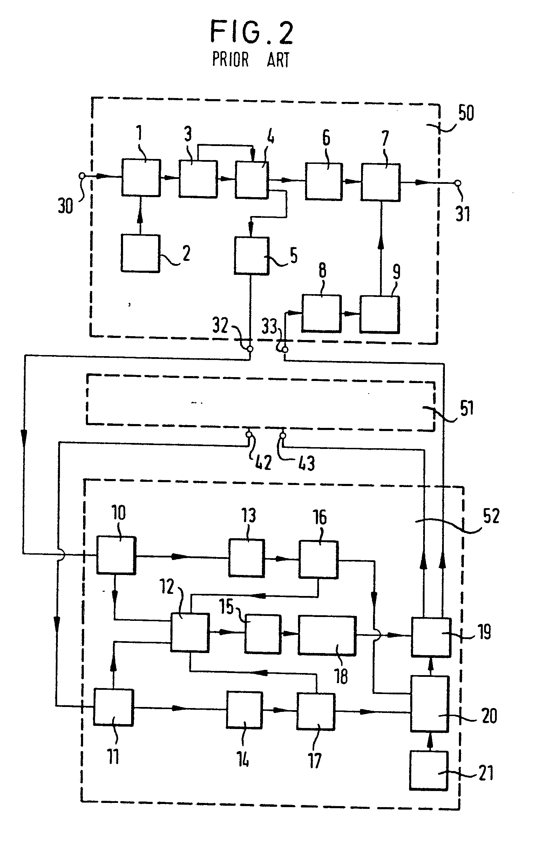

Fig. 2 is a block diagram of a prior art radio repeater which consists of main and sub receiver-transmitters 50 and 51 and a supervisory-controller 52 without receiving and transmitting antennas and their attached circuits. The repeater is described in the instruction manual for Fujitsu's TA-275 type (F) eight phase PSK modulator and demodulator, model MO2P-1821-B001. Both main and sub receiver-transmitters are hot and either one which produces an output having better S/N ratio is automatically selected. The function of the radio repeater will be mainly explained in connection with the main receiver-transmitter hereinafter. An input signal which comes into an input terminal 30 from an antenna and an output of a receiving local oscillator 2 are mixed in a receiving mixer 1 and converted to an intermediate frequency (IF) signal is amplified by an amplifier 3 and fed to a squelch circuit 4. The squelch circuit 4 operates as a switching circuit so that an IF signal goes to next stage when a level of the IF signal exceeds a threshold level designated in the squelch circuit. This switching operation can be made as follows: an IF signal mean level provided by the IF amplifier 3 is fed to the squelch circuit through a connecting line 22; the mean level is compared with the threshold level; and the IF signal can go to the next stage through the squelch circuit when the mean level exceeds the threshold level and vice versa. A branch circuit is in the squelch circuit 4 so that the IF signal which has gone through the squelch circuit 4 is separated into two in a half level, and one of the two goes to an IF amplifier 6 of the transmitter-receiver 50 and the other goes to the supervisory-controller 52. The former IF signal is amplified by the IF amplifier 6, and mixed with an output of a transmitting local oscillator 9 by a transmitting mixer 7 to convert it to a radio frequency (RF) signal; the RF signal goes out from the output terminal 31, and transmitted to a successive relay station through a transmitting antenna. The transmitting local oscillator 9 is modulated in a frequency modulation by an auxiliary signal which will be explained later, so that the receiver-transmitter 50 can relay the main signal with the auxiliary signal. The latter IF signal is demodulated by a demodulator 5 in which a received auxiliary signal is taken out and sent to the supervisory-controller 52 through an output terminal 32 of the-receiver-transmitter 50.

The received auxiliary signal coming from the receiver-transmitter 50 is amplified by a low frequency amplifier 10 in the supervisory-controller 52, and a part of the amplified signal is fed to a filter 13 through which a pilot signal included in the received auxiliary signal is filtered out and fed to a judging circuit 16. The judging circuit 16 judges the pilot signal to determine whether it is correct or not for the route in which its own radio repeater belongs and produces a judged signal and sends it to switching circuits 12 and 20. When the judged signal is correct, the switching circuit 12 becomes on and the switching circuit 20 becomes off. When the switching circuit 12 becomes on, the received auxiliary signal is fed to a remote controller 18 through a low frequency amplifier 15, and the remote controller 18 selects out signals required by the relay station and inserts another supervisory signal. The inserted supervisory signal is amplified by a low frequency amplifier 19 and sent to an input terminal 33 of the main receiver-transmitter 50. The inserted supervisory signal is amplified again by a low frequency amplifier 8, and fed to the transmitting local oscillator 9. And so, the transmitting RF carrier can be modulated by the inserted supervisory signals in the form of frequency modulation. Thus, the relayed main signal and the auxiliary signal including the inserted supervisory signal can be relayed to a successive relay station with the pilot signal included in the IF signal. The same process to the above is advanced in the sub-receiver-transmitter 51; the received auxiliary signal which comes from the output terminal 42 of the sub-receiver-transmitter 51 is fed to a low frequency amplifier 11 of the supervisory-controller 52; this signal is also dealt with the same process mentioned above; and the switching circuit 12 compares the both signals amplified by the low frequency amplifier 10 and 11 and selects either signal having better S/N ratio. The inserted supervisory signal is also fed to an input terminal 43 of the sub-receiver-transmitter 51 to modulate the RF carrier. The RF signals from the receiver-transmitters 50 and 51 are compared and an RF signal having higher level is transmitted to the successive relay stations.

When the desired wave decays and there is no undesired wave which comes into the radio repeater, the squelch circuit 4 in the receiver-transmitter 50 turns the IF amplifiers 3 and 6 off, so that there is no output of the received auxiliary signal at the output terminal 32. Then, the judging circuits 16 and 17 in the supervisory-controller 52 make the switching circuit 12 off so that the connection between the low frequency amplifiers 10 and 15 is off, so only the inserted supervisory signal is fed to the low frequency amplifier 19, and make the switching circuit 20 on, so a regular pilot signal from a pilot signal oscillator 21 is also fed to the low frequency amplifier 19. The inserted supervisory signal and the generated correct pilot signal are fed to the transmitting local oscillator 9 and modulate the transmitting RF carrier. As the inserted supervisory signal includes information that the relay station discussed here does not receive the desired wave, the terminal station can recognize that there is some trouble before this relay station in the route.

The explanation mentioned above is as to the receiving state at the radio repeater when the desired wave is dominant to the undesired wave or when the desired wave is decayed and the radio repeater does not receive any radio wave. However, the following state sometimes occurs. The radio repeater receives both waves, a desired wave and an undesired wave, the level of the undesired wave is lower than that of the desired wave but higher than the threshold level of the squelch circuit. In this state, when the desired wave level is sufficiently high in comparison with that of the undesired wave, the operation of the radio repeater is normal. However, once the level of the desired wave decays due to fading for example, the level of the undesired wave becomes dominant, so that a main signal and an auxiliary signal on the undesired wave become dominant. As a result, a received pilot signal is incorrect, so the judging circuit 16 makes the switching circuit 12 off and the switching circuit 20 on. Then, the inserted supervisory signal goes to the transmitting local oscillator 9 with the generated correct pilot signal. On the other hand, the IF signal which includes an incorrect pilot signal goes through the squelch circuit 4 and is fed to the transmitting mixer 7 through the IF amplifier 6. Consequently, the received incorrect pilot signal and the generated correct pilot signal are mixed in the tansmitting mixer 7 and sent to a successive relay station.

When such mixed pilot signal arrives at the terminal station, as each pilot signal consists of different low frequencies, the terminal station is thrown into confusion to determine a pilot signal. This causes the terminal station to reject the whole reception. This means that the terminal station cannot receive the supervisory signal from the relay station, in other words, there is no way to find out which path is subject to fading and which relay station has trouble. This has been a problem of the prior art radio relay method and apparatus for the digital communication.

An object of the present communication is to provide an improved radio relay method for digital communication and to provide an apparatus for performing the method.

Another object of the invention is to provide a method and apparatus for use in radio relay which enables correct reception of the supervisory signal at the terminal station even if the desired wave is subject to fading.

According to one aspect of the invention, there is provided a method of radio relay for digital communication comprising:

receiving a transmitting signal at a relay station in a radio relay system, the transmitting signal comprising a main signal and an auxiliary signal, the main signal comprising a signal for transmitting data, and the auxiliary signal comprising a route signal for discriminating individual radio relay routes through which a signal may be transmitted;

extracting the auxiliary signal from the received transmitting signal;

detecting the route signal in the extracted auxiliary signal;

discriminating in the relay station, from the detected route signal, whether the received transmitting signal has arrived via a correct route or via an incorrect route;

producing a substitute auxiliary signal at the relay station, the substitute auxiliary signal comprising a substitute route signal which is equal to the correct route signal; and

sending the substitute auxiliary signal to successive relay stations from the relay station using the substitute route signal when the received transmitting signal is determined to come from an incorrect route;

characterised by:

preventing the received transmitting signal passing to the successive relay stations on the radio relay route from the relay station when the received transmitting signal is determined to come from an incorrect route.

According to another aspect of the invention, there is provided radio relay apparatus for digital communication comprising:

a repeater for receiving a radio signal consisting of a main signal and an auxiliary signal the main signal comprising a signal for transmitting data, and the auxiliary signal comprising a route signal for discriminating individual radio relay routes through which a transmitting signal may be transmitted;

means for extracting the auxiliary signal from the received transmitting signal;

means for detecting the route signal in the extracted auxiliary signal;

means for discriminating from the route signal whether said signal has arrived via a correct route in which said repeater belongs or via an incorrect route;

means for producing a substitute auxiliary signal at the relay station, the substitute auxiliary signal comprising a substitute route signal which is equal to the correct route signal; and

means for sending the substitute auxiliary signal to successive relay stations from the relay station using the substitute route signal when the received transmitting signal is determined to come from an incorrect route;

characterised by:

means for preventing the received transmitting signal passing to successive relay stations on the radio relay route from the relay station when the received transmitting signal is determined to come from an incorrect route.

Applying the present invention to the radio relay system, a terminal station in the route in which the relay station and the terminal station belong can detect the correct pilot signal and can recognize a state of the relay station from the supervisory signal inserted by the radio repeater.

For a better understanding of the invention, and to show how the same may be carried into effect, reference will now be made, by way of example, to the accompanying drawings, in which:

Fig. 1 is a drawing illustrating routes of digital communication systems;

Fig. 2 is a block diagram for a prior art radio repeater; and

Fig. 3 is a block diagram for an embodiment of a radio repeater to which the present invention is applied.

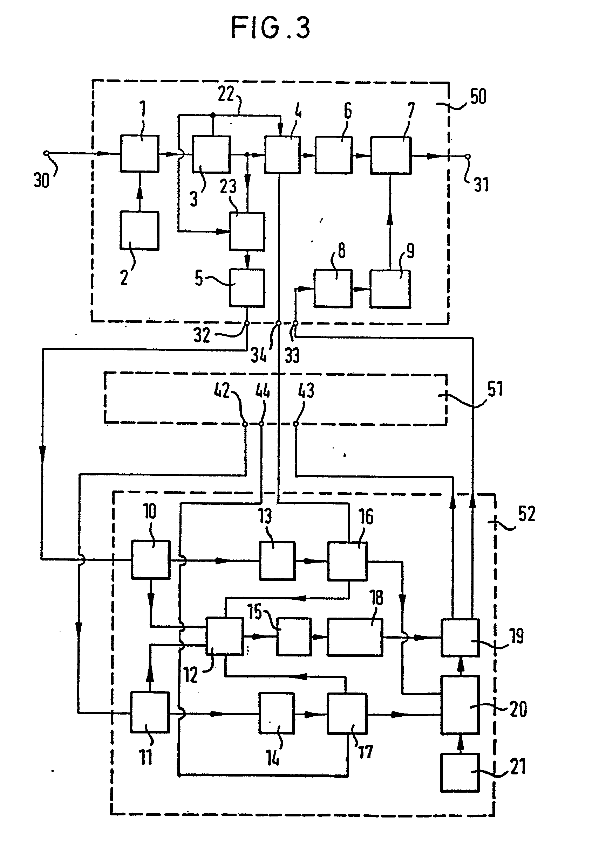

Fig. 3 is a block diagram of the embodiment of a radio repeater to which the present invention is applied. In the Figure, the same reference numerals as in Fig. 2 designate the same elements or parts. The radio repeater consists of a main receiver-transmitter 50, a sub-receiver-transmitter 51, and a supervisory-controller 52. Respective functions of the units are the same to those in Fig. 2 however some parts of respective units are changed as follows: (1) in the main receiver-transmitter 50, the IF signal is separated into two parts at an input point of the squelch circuit 4, one of which is fed to the demodulator 5, and the other IF signal is fed to the squelch circuit 4; (2) the IF signal to be demodulated by the demodulator 5 is firstly fed to a level switching circuit 23 which is a switching circuit to stop the IF signal going to the demodulator 5 when the mean level of the IF signal decrease as low as a noise level, this is to avoid that the judging circuit 16 would be thrown into confusion in its judge operation by noise which comes out when there are no main and auxiliary signals in the IF signal, the same change is applied to the sub-receiver-transmitter 51; and (3) the judging circuit 16 also produces a control signal to the squelch circuit 4 through an input terminal 34 of the receiver-transmitter 50, so that the judging circuit 16 controls the squelch circuit 4 to make the received IF signal go through it when the judging circuit 16 judges the received pilot signal correct, and the judging circuit 16 controls the squelch circuit 4 to stop the received IF signal going through when the received pilot signal is judged incorrect by the judging circuit 16, the same function is also added to sub-receiver-transmitter 51.

As doing so, when the level of the desired wave is dominant to that of the undesired wave, the switching circuit 23 makes the IF signal go through it, the received auxiliary signal is demodulated from the IF signal by the demodulator 5, the judging circuit 16 judges the received pilot signal correct and controls the squelch circuit 4 to make the received IF signal go to the transmitting mixer 7 through the IF amplifier 6 so that the IF signal is converted to a radio wave and transmitted. Besides, the judging circuit 16 controls the auxiliary signal switching circuit 12 to make the received auxiliary signal go to the next stage, and controls the pilot signal switching circuit 20 to stop the pilot signal generated by the pilot signal oscillator 21 going through, so that a part of the received auxiliary signal and the provided supervisory signal are mixed at the remote controller 18 and they are fed to the local oscillator 9 to modulate the radio frequency in a form of frequency modulation. Consequently the received main signal and part of the received auxiliary signal and the supervisory signal provided in the radio repeater can be transmitted to a successive relay station when the desired wave is dominant.

Meanwhile, when the undesired wave becomes dominant because the desired wave decays due to fading for example, the level switching circuit 23 makes the IF signal go through it, the received auxiliary signal is demodulated from the IF signal by the demodulator 5, the judging circuit 16 judges the received pilot signal incorrect and controls the squelch circuit 4 so as to stop the received IF signal going to the next stage, controls the auxiliary signal switching circuit 12 so as to stop the received auxiliary signal going to the next stage, and also controls the pilot signal switching circuit 20 so as to make the correct pilot signal generated by the pilot signal oscillator 21 go to the transmitting local oscillator 9. Therefore, the transmitting mixer 7 transmits no main signal, only transmits the supervisory signal provided by the remote controller 18 and the generated correct pilot signal in a form of frequency modulation to a successive relay station.

When the radio repeater receives no RF signal, which means there are no desired and undesired waves, the level switching circuit 23 stops the noise going to the supervisory-controller 52, the judging circuit 16 controls the switching circuits 12 and 20 so that they operate the same as in the case of the undesired wave, and the squelch circuit 4 stops the noise going through it. Consequently, the relay station transmits only the supervisory signal provided by the radio repeater to the successive relay station with the correct pilot signal generated by the radio repeater.

Thus, although a radio repeater at a relay station of a route receives an undesired wave, the terminal station of the route identifies the correct pilot signal and recognizes the information from the relay station receiving the undesired wave.

**Claims**

1. A method of radio relay for digital communication comprising:
   receiving a transmitting signal at a relay station in a radio relay system, the transmitting signal comprising a main signal and an auxiliary signal, the main signal comprising a signal for transmitting data, and the auxiliary signal comprising a route signal for discriminating individual radio relay routes through which a signal may be transmitted;
   extracting the auxiliary signal from the received transmitting signal;
   detecting the route signal in the extracted auxiliary signal;
   discriminating in the relay station, from the detected route signal, whether the received transmitting signal has arrived via a correct route or via an incorrect route;
   producing a substitute auxiliary signal at the relay station, the substitute auxiliary signal comprising a substitute route signal which is equal to the correct route signal; and
   sending the substitute auxiliary signal to successive relay stations from the relay station using the substitute route signal when the received transmitting signal is determined to come from an incorrect route;
   characterised by:
   preventing the received transmitting signal passing to the successive relay stations on the radio relay route from the relay station when the received transmitting signal is determined to come from an incorrect route.

2. A method according to claim 1, wherein the substitute auxiliary signal further comprises a substitute supervisory signal for successive relay stations when the received transmitting signal is determined to come from the incorrect route, the substitute supervisory signal providing information to said successive relay stations that the received transmitting signal comes from the incorrect route.

3. A method according to claim 1 or 2 wherein the detection of the auxiliary signal in the received transmitting signal is performed using a filter (13) provided in the relay station.

4. A method according to any preceding claim wherein the further passage of the received transmitting signal is prevented by means for discriminating whether the received signal has traversed the correct route.

5. A method according to any preceding claim wherein the extraction of the auxiliary signal from the received transmitting signal is performed at a stage preceding a squelch circuit (4) provided in the relay station.

6. A method according to claim 5 further characterised by:
   interrupting said received signal going to a successive relay station by said squelch circuit (4) controlled so as to be off when said received pilot signal is judged incorrect.

7. Radio relay apparatus for digital communication comprising:

a repeater for receiving a radio signal consisting of a main signal and an auxiliary signal the main signal comprising a signal for transmitting data, and the auxiliary signal comprising a route signal for discriminating individual radio relay routes through which a transmitting signal may be transmitted;

means (13) for extracting the auxiliary signal from the received transmitting signal;

means for detecting the route signal in the extracted auxiliary signal;

means (16, 17) for discriminating from the route signal whether said signal has arrived via a correct route in which said repeater belongs or via an incorrect route;

means (2) for producing a substitute auxiliary signal at the relay station, the substitute auxiliary signal comprising a substitute route signal which is equal to the correct route signal; and

means for sending the substitute auxiliary signal to successive relay stations from the relay station using the substitute route signal when the received transmitting signal is determined to come from an incorrect route;

characterised by:

means (4) for preventing the received transmitting signal passing to successive relay stations on the radio relay route from the relay station when the received transmitting signal is determined to come from an incorrect route.

8. Apparatus according to claim 7 characterised by:

(a) means (1, 2) for converting said input radio frequency signal into a received intermediate frequency (IF) signal, said received IF signal including said received signal comprising said main signal and said auxiliary signal including a pilot signal for discriminating said route;

(b) means for separating said received IF signal into two IF signals at an input of a squelch circuit (4) in said repeater;

(c) means for demodulating a received auxiliary signal from one separated IF signal of said two IF signals by a demodulator (5);

(d) means for stopping said one separated IF signal going to said demodulator by a level switching circuit (23), when the mean level of said received IF signal decreases as low as a noise level;

(e) said means for extracting a received pilot signal from said demodulated auxiliary signal comprising a filter (13);

(f) means for supplying said received auxiliary signal to a remote controller (18) by an auxiliary signal switching circuit (12) controlled so as to be on by said discriminating means (16), when said discriminating means (16) judges said received pilot signal to be correct;

(g) said means for providing a substitute auxiliary signal 'being operable to extract information from said received auxiliary signal and to add a supervisory signal at said remote controller (18), when said judging circuit (16) judges said received pilot signal correct;

(h) means for feeding said provided auxiliary signal to a transmitting local oscillator (9), when said discriminating means (16) judges said received pilot signal to be correct;

(i) means for stopping a correct pilot signal generated by a pilot signal oscillator (21) going to said transmitting local oscillator (9) by a pilot signal switching circuit (20) controlled so as to be off by said discriminating means (16), when said discriminating means (16) judges said received pilot signal to be correct;

(j) means for supplying the other separated IF signal of said two IF signals to a transmitting mixer (7) by said squelch circuit (4) controlled so as to be on by said discriminating means (16), when said discriminating means (16) judges said received pilot signal to be correct; and

(k) means for sending said received IF signal with said received pilot signal and said provided auxiliary signal to a successive relay station by said transmitting mixer (7) modulated by said transmitting local oscillator (9), when said discriminating means (16) judges said received pilot signal to be correct.

9. Apparatus according to claim 7, characterised by:

(a) means (1, 2) for converting an input radio frequency signal into a received intermediate frequency (IF) signal, said received IF signal including said received signal comprising said main signal and said auxiliary signal including a pilot signal for discriminating said route;

(b) means for separating said received IF signal into two IF signals at an input of a squelch circuit (4) of said repeater;

(c) means for demodulating a received auxiliary signal from one separated IF signal of said two IF signals by a demodulator (5);

(d) means for stopping said one separated IF signal going to said demodulator (5) by a level switching circuit (23), when a mean level of said received IF signal decreases as low as a noise level;

(e) said means for extracting a received pilot signal from said demodulated auxiliary signal comprising a filter (13);

(f) means for stopping said received auxiliary signal going to a transmitting local oscillator (9) by an auxiliary signal switching circuit (12) controlled so as to be off by said discriminating means (16) and providing only a supervisor signal by a remote controller (18) as a provided auxiliary signal, and feeding said provided auxiliary signal to said transmitting local oscillator (9), when said discriminating means (16) judges said received pilot signal to be incorrect;

(g) means for supplying a correct pilot signal generated by a pilot signal oscillator (21) to said transmitting local oscillator (9) by a pilot signal switching circuit (20) controlled so as to be on by said discriminating means (16), when said discriminating means judges said received pilot signal to be incorrect;

(h) means for stopping the other separated IF signal of said two IF signals going to a transmitting mixer (7) by said squelch circuit (4) controlled so as to be off by said discriminating means (16) when said discriminating means (16) judges said received pilot signal incorrect; and

(i) means for sending said provided auxiliary signal with said generated correct pilot signal to said successive relay station by said transmitting mixer (7) modulated by said transmitting local oscillator (9), when said discriminating means (16) judges said received pilot signal incorrect.

**Patentansprüche**

1. Funkrelaisverfahren zur digitalen Übertragung enthaltend:

Empfangen eines Übertragungssignals an eine Relaisstation in einem Funkrelaissystem, wobei das Übertragungssignal ein Hauptsignal und ein Hilfssignal und das Hauptsignal ein Signal zum Übertragen von Daten sowie das Hilfssignal ein Streckensignal zum Diskriminieren von individuellen Funkrelaisstrecken enthalten, über welche ein Signal übertragen werden kann;

Extrahieren des Hilfssignals von dem empfangenen Übertragungssignal;

Erfassen des Streckensignals in dem extrahierten Hilfssignal;

Diskriminieren in der Relaisstation von dem erfaßten Streckensignal, ob das empfangene Übertragungssignal über eine richtige Strecke oder über eine nichtrichtige Strecke angekommen ist;

Erzeugen eines Ersatz-Hilfssignals in der Relaisstation, wobei das Ersatz-Hilfssignal ein Ersatz-Streckensignal enthält, das gleich dem richtigen Streckensignal ist; und

Senden des Ersatz-Hilfssignals an nachfolgende Relaisstationen von der das Ersatz-Streckensignal benutzenden Relaisstation aus, wenn ermittelt ist, daß das empfangene Übertragungssignal über eine nichtrichtige Strecke gekommen ist;

gekennzeichnet durch:

Verhindern, daß das empfangene Übertragungssignal an die nachfolgenden Relaisstationen auf der Funkrelaisstrecke von der Relaisstation weitergeleitet wird, wenn ermittelt ist, daß das empfangene Übertragungssignal über eine nichtrichtige Strecke gekommen ist.

2. Verfahren nach Anspruch 1, dadurch gekennzeichnet, daß das Ersatz-Hilfssignal weiter ein Ersatz-Überwachungssignal für nachfolgende Relaisstationen enthält, wenn ermittelt ist, daß das empfangene Signal über die nichtrichtige Strecke kommt, wobei das Ersatz-Überwachungssignal Informationen an die nachfolgenden Relaisstationen gibt, daß das empfangene Übertragungssignal über die nichtrichtige Strecke gekommen ist.

3. Verfahren nach Anspruch 1 oder 2, dadurch gekennzeichnet, daß das Erfassen des Hilfssignals in dem empfangenen Übertragungssignal unter Verwendung eines in der Relaisstation vorgesehenen Filters (13) durchgeführt wird.

4. Verfahren nach einem der vorhergehenden Ansprüche dadurch gekennzeichnet, daß das Weiterleiten des empfangenen Übertragungssignals durch Mittel zum Diskriminieren, ob das empfangene Signal über die richtige Strecke gelaufen ist, verhindert wird.

5. Verfahren nach einem der vorhergehenden Ansprüche, dadurch gekennzeichnet, daß das Extrahieren des Hilfssignals von dem empfangenen Übertragungssignal an einer Stufe vor einer in der Relaisstation vorgesehenen Unterdrückungsschaltung (4) durchgeführt wird.

6. Verfahren nach Anspruch 5, weiter gekennzeichnet durch:

Unterbrechen des Weiterleitens des empfangenen Signales an eine nachfolgende Relaisstation durch die Unterdrückungsschaltung (4), die derart gesteuert ist, daß abgeschaltet wird, wenn beurteilt ist, daß das empfangene Pilotsignal nichtrichtig ist.

7. Funkrelaisgerät zur digitalen Übertragung mit

einer Relaisstelle zum Empfangen eines aus einem Hauptsignal und einem Hilfssignal bestehenden Funksignals, wobei das Hauptsignal ein Signal zum Übertragen von Daten und das Hilfssignal ein Streckensignal zum Diskriminieren von individuellen Funkrelaisstrecken enthält, über welche ein Übertragungssignal übertragen werden kann;

Mitteln (13) zum Extrahieren des Hilfssignals von dem empfangenen Übertragungssignal;

Mitteln zum Erfassen des Streckensignals in dem extrahierten Hilfssignal;

Mitteln (16, 17) zum Diskriminieren von dem Streckensignal, ob das Signal über eine richtige zu der Relaisstelle gehörende Strecke ober über eine nichtrichtige Strecke angekommen ist;

Mitteln (2) zum Erzeugen eines Ersatz-Hilfssignals in der Relaisstation, wobei das Ersatz-Hilfssignal ein Ersatz-Streckensignal enthält, das gleich dem richtigen Streckensignal ist; und

Mitteln zum Senden des Ersatz-Hilfssignals an nachfolgende Relaisstationen von der Relaisstation aus mittels des Ersatz-Streckensignals, wenn ermittelt ist, daß das empfangene Übertragungssignal über eine nichtrichtige Strecke gekommen ist;

gekennzeichnet durch:

Mittel (4) zum Verhindern, daß das empfangene Übertragungssignal von der Relaisstation aus an nachfolgende Relaisstationen auf der Funkrelaisstrecke weitergeleitet wird, wenn ermittelt ist, daß das empfangene Signal über eine nichtrichtige Strecke gekommen ist.

8. Gerät nach Anspruch 7, gekennzeichnet durch:

(a) Mittel (I, 2) zum Umwandeln des Eingangsfunkfrequenzsignals in ein empfangenes Zwischenfrequenzsignal (IF), wobei das empfangene IF-Signal das empfangene Signal einschließt, welches das Hauptsignal und ein ein Pilotsignal zum Diskriminieren der Strecke enthaltenes Hilfssignal enthält;

(b) Mittel zum Trennen des empfangenen IF-Signals in zwei IF-Signale an einem Eingang einer Unterdrückungsschaltung (4) in der Relaisstelle;

(c) Mittel zum Demodulieren eines empfangenen Hilfssignals von einem getrennten IF-Signal der zwei IF-Signale durch einen Demodulator (5);

(d) Mittel zum Verhindern, daß das eine getrennte IF-Signal an den Demodulator weitergeleitet wird, durch einen Pegelschaltkreis (23), wenn sich der durchschnittliche Pegel des empfangenen IF-Signals auf einen so niedrigen Pegel wie einem Rauschpegel verringert;

(e) wobei die Mittel zum Extrahieren eines empfangenen Pilotsignals von dem demodulierten Hilfssignal einen Filter (13) enthalten;

(f) Mittel zum Zuführen des empfangenen Hilfssignals an eine entfernte Steuereinheit (18) durch einen Hilfssignalschaltkreis (12), der derart gesteuert ist, daß er durch die Diskriminierungsmittel (16) eingeschaltet wird, wenn die Diskriminierungsmittel (16) beurteilen, daß das empfangene Pilotsignal richtig ist;

(g) wobei die Mittel zum Erzeugen eines Ersatz-Hilfssignals betreibbar sind, um Informationen von dem empfangenen Hilfssignal zu extrahieren und ein Überwachungssignal an die entfernte Steuereinheit (18) zu addieren, wenn der Beurteilungskreis (16) beurteilt, daß das empfangene Pilotsignal richtig ist;

(h) Mittel zum Zuführen des erzeugten Hilfssignals an einen übertragenden lokalen Oszillator (9), wenn die Diskriminierungsmittel (16) ermitteln, daß das empfangene Pilotsignal richtig ist;

(i) Mittel zum Verhindern, daß ein richtiges, durch einen Pilotsignal-Oszillator (21) erzeugtes Pilotsignal an den übertragenden lokalen Oszillator (9) durch einen pilotsignalschaltkreis (20) weitergeleitet wird, der so gesteuert ist, daß er durch die Diskriminierungsmittel (16) ausgeschaltet wird, wenn die Diskriminierungsmittel (16) beurteilen, daß das empfangene Pilotsignal richtig ist;

(j) Mittel zum Zuführen des anderen getrennten IF-Signals der zwei IF-Signale an einen Übertragungsmischkreis (7) durch die Unterdrückungsschaltung (4), die derart gesteuert ist, daß sie durch die Diskriminierungsmittel (16) eingeschaltet ist, wenn die Diskriminierungsmittel (16) beurteilen, daß das empfangene Pilotsignal richtig ist; und

(k) Mittel zum Senden des empfangenen IF-Signals mit dem empfangenen Pilotsignal und dem erzeugten Hilfssignal an eine nachfolgende Relaisstation durch den durch den übertragenen lokalen Oszillator modulierten Übertragungsmischkreis (7), wenn die Diskriminierungsmittel beurteilen, daß das empfangene Pilotsignal richtig ist.

9. Gerät nach Anspruch 7, gekennzeichnet durch:

(a) Mittel (1, 2) zum Umwandeln eines Eingangsfunkfrequenzsignals in ein empfangenes Zwischenfrequenzsignal (IF), wobei das empfangene IF-Signal das empfangene Signal enthält, welches das Hauptsignal und ein ein Pilotsignal zum Diskriminieren der Strecke enthaltenes Hilfssignal enthält;

(b) Mittel zum Trennen des empfangenen IF-Signals in zwei IF-Signale an einem Eingang einer Unterdrückungsschaltung (4) der Relaisstelle;

(c) Mittel zum Demodulieren eines empfangenen Hilfssignals von einem getrennten IF-Signal der zwei IF-Signale durch einen Demodulator (5);

(d) Mittel zum Verhindern, daß das eine getrennte IF-Signal an den Demodulator (5) durch einen Pegelschaltkreis (23) weitergeleitet wird, wenn sich ein durchschnittlicher Pegel des empfangenen IF-Signals auf einen so niedrigen Pegel wie einen Rauschpegel verringert;

(e) Mittel zum Extrahieren eines empfangenen Pilotsignals von dem demodulierten Hilfssignal, die einen Filter (13) enthalten;

(f) Mittel zum Verhindern, daß das empfangene Hilfssignal an einen übertragenden lokalen Oszillator (9) durch einen Hilfs-Signalschaltkreis (12) weitergeleitet wird, der derart gesteuert ist, daß er durch die Diskriminierungsmittel (16) ausgeschaltet wird, und zum Erzeugen nur eines Überwachungssignals durch eine entfernte Steuereinheit (18) als ein erzeugtes Hilfssignal und Zuführen des erzeugten Hilfssignals zu dem übertragenden lokalen Oszillator (9), wenn die Diskriminierungsmittel (16) ermitteln, daß das empfangene Pilotsignal nichtrichtig ist;

(g) Mittel zum Zuführen eines richtigen durch einen Pilotsignaloszillator (21) erzeugten Pilotsignals zu dem übertragenden lokalen Oszillator (9) durch einen Pilotsignalschaltkreis (20), der derart gesteuert ist, daß er durch die Diskriminierungsmittel (16) eingeschaltet wird, wenn die Diskriminierungsmittel ermitteln, daß das empfangene Pilotsignal nichtrichtig ist;

(h) Mittel zum Verhindern, daß das andere getrennte IF-Signal der zwei IF-Signale an einen Übertragungsmischkreis (7) weitergeleitet wird, durch die Unterdrückungsschaltung (4), die derart gesteuert ist, daß durch die Diskriminierungsmittel (16) ausgeschaltet wird, wenn die Diskriminierungsmittel (16) beurteilen, daß das empfangene Pilotsignal nichtrichtig ist; und

(i) Mittel zum Senden des erzeugten Hilfssignals mit dem erzeugten richtigen Pilotsignal an die nachfolgende Relaisstation durch den durch den übertragenden lokalen Oszillator (9) modulierten Übertragungsmischkreis (7), wenn die Diskriminierungsmittel (16) ermitteln, daß das empfangene Pilotsignal nichtrichtig ist.

**Revendications**

1. Procédé de liaison hertzienne par relais pour une transmission numérique consistant à:

recevoir un signal d'émission à une station relais dans un système de liaison hertzienne par relais, le signal d'émission comprenant un signal principal et un signal auxiliaire, le signal principal comprenant un signal pour émettre des données, et le signal auxiliaire comprenant un signal de voie d'acheminement pour faire une discrimination entre les voies d'acheminement radioélectrique par relais individuelles par lesquelles un signal peut être transmis;

extraire le signal auxiliaire du signal d'émission reçu;

détecter le signal de voie d'acheminement dans le signal auxiliaire extrait;

faire une discrimination dans la station relais, à partir du signal de voie d'acheminement détecté, quant au fait que le signal d'émission reçu est arrivé par une voie d'acheminement correcte ou par une voie d'acheminement incorrecte;

produire un signal auxiliaire de substitution à la station relais, le signal auxiliaire de substitution comprenant un signal de voie d'acheminement de substitution qui est égal au signal de voie d'acheminement correcte; et à

envoyer le signal auxiliaire de substitution aux stations relais successives à partir de la station relais mettant en oeuvre le signal de voie d'acheminement de substitution quand le signal d'émission reçu est déterminé comme provenant d'une voie d'acheminement incorrecte;

caractérisé en ce qu'il consiste à:

empêcher que le signal d'émission reçu passe dans les stations relais successives sur la voie d'acheminement radioélectrique par relais à partir de la station relais quand le signal d'émission reçu est déterminé comme provenant d'une voie d'acheminement incorrecte.

2. Procédé selon la revendication 1, dans lequel le signal auxiliaire de substitution comprend en outre un signal de surveillance de substitution pour les stations relais successives quand le signal d'émission reçu est déterminé comme provenant de la voie d'acheminement incorrecte, le signal de surveillance de substitution fournissant des informations aux stations relais successives sur le fait que le signal d'émission reçu provient de la voie d'acheminement incorrecte.

3. Procédé selon l'une quelconque des revendications 1 et 2, dans lequel la détection du signal auxiliaire inclus dans le signal d'émission reçu est exécutée en mettant en oeuvre un filtre (13) prévu dans la station relais.

4. Procédé selon l'une quelconque des revendications 1 à 3, dans lequel l'autre passage du signal d'émission reçu est empêché par le moyen de discrimination quant au fait que le signal reçu a traversé la voie d'acheminement correcte.

5. Procédé selon l'une quelconque des revendications 1 à 4, dans lequel l'extraction du signal auxiliaire du signal d'émission reçu est exécutée dans un étage précédant un circuit de silencieux (4) prévu dans la station relais.

6. Procédé selon la revendication 5, caractérisé en outre en ce qu'il consiste à:

interrompre l'envoi du signal reçu à une station relais successive par le circuit de silencieux (4) commandé de manière à ce qu'il soit bloqué quand le signal pilote reçu est jugé incorrect.

7. Dispositif de liaison hertzienne par relais pour une transmission numérique comprenant:

un répéteur pour recevoir un signal radioélectrique constitué d'un signal principal et d'un signal auxiliaire, le signal principal comprenant un signal pour émettre des données, et le signal auxiliaire comprenant un signal de voie d'acheminement pour faire une discrimination entre les voies d'acheminement radioélectrique par relais individuelles par lesquelles un signal d'émission peut être transmis;

un moyen (13) pour extraire le signal auxiliaire du signal d'émission reçu;

un moyen pour détecter le signal de voie d'acheminement dans le signal auxiliaire extrait;

un moyen (16, 17) pour faire une discrimination à partir du signal de voie d'acheminement quant au fait que le signal est arrivé par une voie d'acheminement correcte à laquelle appartient le répéteur ou par une voie d'acheminement incorrecte;

un moyen (2) pour produire un signal auxiliaire de substitution à la station relais, le signal auxiliaire de substitution comprenant un signal de voie d'acheminement de substitution qui est égal au signal de voie d'acheminement correcte; et

un moyen pour envoyer le signal auxiliaire de substitution aux stations relais successives à partir de la station relais mettant en oeuvre le signal de voie d'acheminement de substitution quand le signal d'émission reçu est déterminé comme provenant d'une voie d'acheminement incorrecte;

caractérisé par:

un moyen (4) pour empêcher que le signal d'émission reçu passe dans les stations relais successives sur la voie d'acheminement radioélectrique par relais à partir de la station relais quand le signal d'émission reçu est déterminé comme provenant d'une voie d'acheminement incorrecte.

8. Dispositif selon la revendication 7, caractérisé par:

(a) un moyen (1, 2) pour convertir le signal de fréquence radioélectrique d'entrée en un signal de fréquence intermédiaire (FI) reçu, le signal FI reçu incluant le signal reçu comprenant le signal principal et le signal auxiliaire incluant un signal pilote pour faire une discrimination de la voie d'acheminement;

(b) un moyen pour séparer le signal FI reçu en deux signaux FI à une entrée d'un circuit de silencieux (4) inclus dans le répéteur;

(c) un moyen pour démoduler un signal auxiliaire reçu à partir d'un signal FI séparé des deux signaux FI par un démodulateur (5);

(d) un moyen pour stopper le passage du signal FI séparé dans le démodulateur par un circuit commutateur de niveau (23), quand le niveau moyen du signal FI reçu diminue jusqu'à un niveau aussi bas qu'un niveau de bruit;

(e) le moyen pour extraire un signal pilote reçu du signal auxiliaire démodulé comprenant un filtre (13);

(f) un moyen pour fournir le signal auxiliaire reçu à un contrôleur à distance (18) par un circuit commutateur de signal auxiliaire (12) commandé de manière à ce qu'il soit conducteur par le moyen de discrimination (16), quand le moyen de discrimination (16) juge que le signal pilote reçu est correct;

(g) le moyen pour fournir un signal auxiliaire de substitution pouvant être actif pour extraire des informations du signal auxiliaire reçu et pour ajouter un signal de surveillance dans le contrôleur à distance (18), quand le circuit de jugement (16) juge que le signal pilote reçu est correct;

(h) un moyen pour envoyer le signal auxiliaire fourni à un oscillateur local d'émission (9), quand le moyen de discrimination (16) juge que le signal pilote reçu est correct;

(i) un moyen pour stopper le passage d'un signal pilote correct engendré par un oscillateur à signaux pilotes (21) dans l'oscillateur local d'émission (9) par un circuit commutateur de signal pilote (20) commandé de manière à ce qu'il soit bloqué par le moyen de discrimination (16), quand le moyen de discrimination (16) juge que le signal pilote reçu est correct;

(j) un moyen pour fournir l'autre signal FI séparé des deux signaux FI à un mélangeur d'émission (7) par le circuit de silencieux (4) commandé de manière à ce qu'il soit conducteur par le moyen de discrimination (16), quand le moyen de discrimination (16) juge que le signal pilote reçu est correct; et

(k) un moyen pour envoyer le signal FI reçu avec le signal pilote reçu et le signal auxiliaire fourni à une station relais successive par le mélangeur d'émission (7) modulé par l'oscillateur local d'émission (9), quand le moyen de discrimination (16) juge que le signal pilote reçu est correct.

9. Dispositif selon la revendication 7, caractérisé par:

(a) un moyen (1, 2) pour convertir un signal de fréquence radioélectrique d'entrée en un signal de fréquence intermédiaire (FI) reçu, le signal FI reçu incluant le signal reçu comprenant le signal principal et le signal auxiliaire incluant un signal pilote pour faire une discrimination de la voie d'acheminement;

(b) un moyen pour séparer le signal FI reçu en deux signaux FI à une entrée d'un circuit de silencieux (4) du répéteur;

(c) un moyen pour démoduler un signal auxiliaire reçu à partir d'un signal FI séparé des deux signaux FI par un démodulateur (5);

(d) un moyen pour stopper le passage du signal FI séparé dans le démodulateur (5) par un circuit commutateur de niveau (23), quand un niveau moyen du signal FI reçu diminue jusqu'à un niveau aussi bas qu'un niveau de bruit;

(e) le moyen pour extraire un signal pilote reçu du signal auxiliaire démodulé comprenant un filtre (13);

(f) un moyen pour stopper le passage du signal auxiliaire reçu dans un oscillateur local d'émission (9) par un circuit commutateur de signal auxiliaire (12) commandé de manière à ce qu'il soit bloqué par le moyen de discrimination (16) et ne fournissant qu'un signal de surveillance par un contrôleur à distance (18) comme signal auxiliaire fourni, et envoyant le signal auxiliaire fourni à l'oscillateur local d'émission (9), quand le moyen de discrimination (16) juge que le signal pilote reçu est incorrect;

(g) un moyen pour fournir un signal pilote correct engendré par un oscillateur à signaux pilotes (21) à l'oscillateur local d'émission (9) par un circuit commutateur de signal pilote (20) commandé de manière à ce qu'il soit conducteur par le moyen de discrimination (16), quand le moyen de discrimination juge que le signal pilote reçu est incorrect;

(h) un moyen pour stopper le passage de l'autre signal FI séparé des deux signaux FI dans un mélangeur d'émission (7) par le circuit de silencieux (4) commandé de manière à ce qu'il soit bloqué par le moyen de discrimination (16) quand le moyen de discrimination (16) juge que le signal pilote reçu est incorrect; et

(i) un moyen pour envoyer le signal auxiliaire fourni avec le signal pilote correct engendré à la station relais successive par le mélangeur d'émission (7) modulé par l'oscillateur local d'émission (9), quand le moyen de discrimination (16) juge que le signal pilote reçu est incorrect.

EP 0 142 789 B1

# FIG.1

# FIG.2
### PRIOR ART

EP 0 142 789 B1

# FIG.3